**Europäisches Patentamt**

**European Patent Office**

**Office européen des brevets**

(19)

(11) Veröffentlichungsnummer: **0 072 405**
**B1**

(12)

# EUROPÄISCHE PATENTSCHRIFT

(45) Veröffentlichungstag der Patentschrift:
**04.06.86**

(51) Int. Cl.⁴: **C 08 L 51/00, C 08 J 3/00**

(21) Anmeldenummer: **82105563.9**

(22) Anmeldetag: **24.06.82**

(54) **Verfahren zur Herstellung von rieselfähigen, nicht klebenden Vinylchloridpfropfpolymeren.**

(30) Priorität: **19.08.81 DE 3132694**

(43) Veröffentlichungstag der Anmeldung:
**23.02.83 Patentblatt 83/8**

(45) Bekanntmachung des Hinweises auf die Patenterteilung:
**04.06.86 Patentblatt 86/23**

(84) Benannte Vertragsstaaten:
**BE DE FR GB IT NL SE**

(56) Entgegenhaltungen:
**EP - A - 0 026 484**
**BE - A - 653 851**
**DE - A - 1 495 694**
**DE - A - 1 694 816**
**DE - A - 1 694 918**

(73) Patentinhaber: **HÜLS AKTIENGESELLSCHAFT,**
**Patentabteilung / PB 15 - Postfach 13 20,**
**D-4370 Marl 1 (DE)**

(72) Erfinder: **Flatau, Karsten, Dr., An der Mühlenstege 22,**
**D-4358 Haltern (DE)**

EP 0 072 405 B1

## Beschreibung

Die Erfindung betrifft ein Verfahren zur Herstellung eines rieselfähigen, nicht klebenden Pfropfpolymerisates des Vinylchlorids auf Ethylen-Vinylacetatcopolymerisate mit hohem Ethylen-Vinylacetat-Copolymerisatgehalt.

Vinylchloridpfropfcopolymere mit hohem Elastifizierharzanteil (≥30%, insbesondere 40%) sind nicht genügend rieselfähig und neigen beim Lagern zum Verkleben. Das verklumpte Material muss unter Umständen vor der Verarbeitung zerstossen werden. Das schlecht rieselnde Pulver lässt sich schwer in die Verarbeitungsaggregate einziehen. Die genannten Pulvereigenschaften mindern die Ausstossleistung bei der Verarbeitung. Es ist daher erwünscht, dass derartige Pfropfcopolymere des Vinylchlorids gut rieselfähig sind, unter Druck- und Temperaturbelastung rieselfähig bleiben, und das Schüttgut sich nicht verfestigt.

Aus der BE-A-653 851 sind zwar schlagfeste Polyvinylchloridpolymerisate bekannt, diese werden jedoch nicht durch Pfropfpolymerisation sondern durch Mischen einer Emulsion der schlagfest machenden Komponente und einer Emulsion des Polyvinylchlorid und Koagulieren mit einem Salz hergestellt. Da die schlagfest machende Komponente nur in einer Menge bis zu 20 Gew.% enthalten ist, tritt das Problem des Verklebens bzw. Verklumpens beim Lagern nicht auf.

Die EP-A-26 484 betrifft das Einkapseln elastomerer Teilchen mit z.B. Polyvinylchlorid. Dabei werden Dispersionen beider Komponenten mit einem Koagulationsmittel gefällt. Die Anwesenheit von Koagulationsmitteln stört jedoch bei der Weiterverarbeitung vor allem durch die Verschlechterung der elektrischen Werte.

Die Herstellung von schlagzähen Pfropfpolymerisaten des Vinylchlorids auf Ethylen-Vinylacetat-Copolymerisate mit einem Vinylacetatgehalt von 20 bis 80 Gewichtsprozent ist bekannt (DE-PS 1 495 694). Es ist auch bekannt, schlagzähe Produkte herzustellen durch Abmischen von Ethylen-Vinylacetat-Copolymeren und Polyvinylchlorid. Die Pfropfcopolymerisation hat gegenüber der Herstellung von Mischungen den Vorteil, dass das hochelastomerhaltige Pfropfcopolymere weniger klebt und sich leichter mit Polyvinylchlorid verschneiden lässt. Pfropfcopolymere mit über 40% Ethylen-Vinylacetatgehalt kleben jedoch zu stark. Die Produkte sind für die Verarbeitung nicht genügend rieselfähig und verklumpen z.B. bei der Sacklagerung in Paletten.

Die DE-AS 1 694 918 beschreibt ein Verfahren zum Herstellen eines trockenen, nicht klebenden und während des Lagerns nicht zusammenbackenden Pulvers aus festen Elastomerprodukten. Dabei wird ein Latex, dessen Feststoffgehalt zu 30 bis 100 Gewichtsprozent aus einem elastomeren und zum restlichen Teil aus einem nicht elastomeren Polymer besteht, durch Zusatz von Koagulationsmitteln unter Rühren zur Koagulation gebracht. Dem Koagulat werden 0,5 bis 25 Gewichtsprozent eines harten Polymerisates, z.B. Polyvinylchlorid, in Latexform zugemischt. Der Latex wird erneut koaguliert, bevor das fertige Produkt abgetrennt und getrocknet wird. Auf diese Weise werden z.B. Produkte hergestellt, welche aus 40 bis 60 Gewichtsprozent eines Vinylacetat-Ethylencopolymeren mit 45 bis 95% Vinylacetat und 60 bis 40 Gewichtsprozent Polyvinylchlorid bestehen. Die erhaltenen Produkte sind flockig.

Rieselfähige Mischungen aus Ethylen-Vinylacetat-Copolymeren und pulverförmigem Polyvinylchlorid werden dadurch erhalten, indem Ethylen-Vinylacetat-Copolymere und Polyvinylchlorid in schnellaufenden Mischern bei einem Mischungsverhältnis von 1:3 bis 2:1 homogenisiert, mit Wasser abgeschreckt und unter Zusatz von Puderungsmitteln in einer schnellaufenden Mühle gemahlen und dann getrocknet werden (DE-OS 2 540 378). Auch bei diesem Verfahren sind hohe Anteile an Polyvinylchlorid notwendig, zudem besteht die Methode aus vielen Arbeitsgängen und ist somit vergleichsweise aufwendig.

Aus der DE-OS 1 694 816 ist es weiterhin bekannt, nicht klumpende Pfropfpolymere herzustellen durch Koagulation des Pfropfpolymeren und Vermischen des Koagulates mit dem Latex eines harten Polymeren. Auch bei dieser Verfahrensweise wird ein Koagulationsmittel benötigt, dessen Anwesenheit bei der nachfolgenden Verarbeitung stört, vor allem durch die dadurch bedingte Wasserempfindlichkeit der Produkte und deren verschlechterte elektrische Werte.

Diese Nachteile des Standes der Technik wurden überraschenderweise überwunden durch ein Verfahren zur Herstellung von rieselfähigen, nicht klebenden Vinylchloridpfropfpolymeren, wie es durch die Patentansprüche gekennzeichnet ist.

Das Vinylchlorid-Pfropfpolymere aus Ethylen-Vinylacetat-Copolymerisat und Vinylchlorid hat mehr als 30 Gewichtsprozent und insbesondere mehr als 40 Gewichtsprozent Ethylen-Vinylacetat-Gehalt.

Es kann in üblicher Weise durch Suspensionspolymerisation von Vinylchlorid in Gegenwart von Ethylen-Vinylacetat-Copolymerisaten hergestellt werden, wie es beispielsweise in der DE-PS 1 495 694 beschrieben ist. Dabei kann die Suspensionspolymerisation in beliebiger Weise in Gegenwart irgendeines der üblichen momomerlöslichen Katalysatoren durchgeführt werden, z.B. solchen aus den Gruppen der Diacyl-, Dialkyl- oder Aroylperoxide, wie beispielsweise Diacetyl-, Dibenzoyl-, Dilauroyl-, 2,4-Dichlorbenzoylperoxid; der Peroxidicarbonate, wie Diisopropyl-, Dicyclohexyl-, Di-tert.-butylcyclohexyl-, Diethylcyclohexyl-, Dimyristyl-, Dicetyl-, Distearylperoxidicarbonat; der Perester, wie Isopropyl-, tert.-Butylperacetat, tert.-Butylperoctoat, tert.-Butylperpivalat, tert.-Butyl-, Iso-Amylperneodecanoat; der gemischten Anhydride organischer Sulfopersäuren und organischer Säuren, wie z.B. Acetylcyclohexylsulfonylperoxid; der Azoverbindungen, wie z.B. Azoisobuttersäurenitril und Azobisdimethylvalerodinitril. Die Katalysatoren können in Mengen von 0,01 bis 0,3 Gewichtsprozent, bezogen auf Vinylchlorid eingesetzt werden.

Ferner kann die Suspensionspolymerisation in Gegenwart von einem oder mehreren Schutzkolloiden, wie beispielsweise teilverseifte Polyvinylacetate, Cellulosederivate, wie wasserlösliche Methylcellulose, Carboximethylcellulose, Hydroxiethylcellulose, Methylhydroxipropylcellulose, sowie Gelatine, ferner Polyalkylenoxide oder Mischpolymerisate von Maleinsäure bzw. deren Halbestern und Styrolen, stattfinden. Die Menge der eingesetzten Schutzkolloide kann 0,01 bis 1 Gewichtsprozent, vorzugsweise 0,05 bis 0,4, betragen.

Ausserdem kann die Suspensionspolymerisation in Gegenwart von 0,01 bis 5 Gewichtsprozent, bezogen auf Monomere, von Cosuspensionsmitteln durchgeführt werden, welche in Mischung mit den obengenannten Schutzkolloiden eingesetzt werden. Als Cosuspensionsmittel sind beispielsweise geeignet: Teilfettsäureester mehrwertiger Alkohole, wie Glycerinmonostearat, Sorbitmonolaurat, -oleat oder -palmitat, Polyoxiethylenether von Fettalkoholen oder aromatischen Hydroxiverbindungen; Polyoxiethylenester von Fettsäuren, Polypropylenoxid-Polyethylenoxid-Kondensationsprodukte sowie teilverseifte Polyvinylacetate mit einem Verseifungsgrad von ca. 30 bis 50 Mol-%.

Die Polymerisationstemperatur der Suspensionspolymerisation wird i.A. 30 bis 70 °C betragen. Die so erhaltenen Suspensionspolymerisate haben K-Werte von 50 bis 70, vorzugsweise 55 bis 65.

Das Rühren kann mit üblichen Impeller-Rührern erfolgen, mit normaler Geschwindigkeit.

Das Ethylen-Vinylacetat-Copolymerisat enthält 30 bis 70 Gewichtsprozent an Vinylacetat-Einheiten.

Es werden 0,5 bis 10% Emulsions- oder Mikrosuspensions-Polyvinylchlorid, vorzugsweise 3 bis 5 Gewichtsprozent Polyvinylchlorid, mit einem K-Wert von 50 bis 90, vorzugsweise 60 bis 80, auf das in Suspension hergestellte Pfropfcopolymerisat aus Vinylchlorid und Ethylen-Vinylacetatcopolymerisaten aufgefällt.

Geeignete Polyvinylchlorid-Dispersionen können diskontinuierlich, kontinuierlich, nach Saatlatexmethoden oder durch Mikrosuspensionspolymerisation hergestellt werden unter Einsatz der bei der Emulsionspolymerisation bzw. Mikrosuspensionspolymerisation üblichen Emulgator- und Initiatorsysteme.

Bei der Herstellung durch übliche Emulsionspolymerisation eignen sich als Katalysatoren alle in der Emulsionspolymerisation üblichen wasserlöslichen Radikalkatalysatoren, z.B. Persulfate, wie Kalium-, Natrium- oder Ammoniumpersulfat, Wasserstoffperoxid, tert.-Butylhydroperoxid, Na-Perborat, K-Percarbonat, oder andere wasserlösliche Peroxide, sowie auch entsprechende Gemische. Im Falle von peroxidischen Katalysatoren können diese auch in Gegenwart von 0,01 bis 1 Gewichtsprozent, bezogen auf Monomere, einer oder mehrerer reduzierender Substanzen, die zum Aufbau eines Redoxy-Katalysatorsystems geeignet sind, wie z.B. Sulfite, Bisulfite, Dithionite, Thiosulfate, Aldehyd-Sulfoxylate, z.B. Formaldehydsulfoxylat, eingesetzt werden.

Im allgemeinen sind etwa 0,075 bis 0,1 Gewichtsprozent, bezogen auf das Gewicht der Monomeren, an Katalysator oder Redoxsystem erforderlich.

Ausserdem kann die Emulsionspolymerisation in Gegenwart von 0,01 bis 5 Gewichtsprozent, bezogen auf Monomere, von einem oder mehreren Emulgatoren durchgeführt werden. Als Emulgatoren können anionische, amphotere, kationische sowie nichtionogene verwendet werden. Als anionische Emulgatoren sind beispielsweise geeignet: Alkali-, Erdalkali-, Ammoniumsalze von Fettsäure, wie Laurin-, Palmitin-, oder Stearinsäure; von sauren Fettalkoholschwefelsäureestern; von Parrafinsulfonsäuren; von Alkylarylsulfonsäuren, wie Dodecylbenzol- oder Dibutylnaphthalinsulfonsäure, von Sulfobernsteinsäuredialkylestern, sowie die Alkali- und Ammoniumsalze von epoxigruppenhaltigen Fettsäuren, wie Epoxistearinsäure. Als amphotere bzw. kationenaktive Emulgatoren sind beispielsweise geeignet: Alkylbetaine, wie Dodecylbetain, sowie Alkylpyridiniumsalze, wie Laurylpyridiniumhydrochlorid; ferner Alkylammoniumsalze, wie Oxethyldodecylammoniumchlorid. Als nichtionogene Emulgatoren kommen beispielsweise infrage: Teilfettsäureester mehrwertiger Alkohole, wie Glycerinmonostearat, Sorbitmonolaurat, -oleat oder -palmitat; Polyoxiethylenether von Fettalkoholen oder aromatischen Hydroxiverbindungen; Polyoxiethylenester von Fettsäuren sowie Polypropylenoxid-Polyethylenoxid-Kondensationsprodukte.

Die Emulsionspolymerisation kann bei üblichen Temperaturen von 30 bis 90 °C, vorzugsweise 60 bis 70 °C, und üblichen Drucken durch Batch- oder Zulauf-Verfahrensweise, wobei ein Teil der Monomeren vorgelegt und der Rest nachdosiert wird, durchgeführt werden.

Die Mikrosuspensionspolymerisation wird gleichfalls nach bekannten Methoden durchgeführt. Diese Methoden sind beispielsweise beschrieben in DE-PSS 962 834 und 1 069 387, den DE-ASS 1 050 062 und 1 076 373, in der GB-PS 698 359 und der US-PS 2 674 585.

Nach beendeter Suspensionspolymerisation werden 0,5 bis 10 Gewichtsprozent, vorzugsweise 3 bis 5 Gewichtsprozent an Polyvinylchlorid in Latexform zugegeben. Das Suspensions-Latex-Gemisch wird nunmehr bei Temperaturen von 30 bis 90 °C, vorzugsweise 55 bis 85 °C, während einer Zeitspanne von 10 bis 60 min mit in der Suspensionspolymerisation üblichen Rührgeschwindigkeiten gerührt. Durch diese Massnahme wird das Polyvinylchlorid gleichmässig auf das Suspensions-Pfropfpolymerisat aufgefällt. Ein längeres Rühren bei 55 bis 85 °C ist zwar möglich, verbessert das Ergebnis aber nicht.

Gleichzeitig mit dem Rühren des Suspensions-Latex-Gemisches bei 55 bis 85 °C kann auch die sich üblicherweise an die Polymerisation anschliessende Kesselentgasung zur Rück-VC-Gewinnung betrieben werden.

Die Suspensionspolymerisate mit aufgefälltem Polyvinylchlorid können nach üblichem Verfahren aufgearbeitet werden, d.h. abgenutscht oder abgeschleudert und in Stromtrocknern, Trommeltrocknern etc. getrocknet.

Die erhaltenen Produkte sind rieselfähig und verklumpen nicht beim Lagern, d.h. sie haben eine geringe Schüttgutfestigkeit.

Die Rieselfähigkeit kann in einfacher Weise geprüft werden, indem man mit Hilfe einer Reihe von Trichtern mit unterschiedlichen Öffnungen feststellt, wann das Pulver noch frei ausfliesst (s. M. Doysen, I. Cronebaum, Plastverarbeiter 23 (8), 549 (1972)).

Ein gut rieselfähiges Pulver läuft aus einem Trichter mit einer Öffnung von 2 mm gut aus, schlecht rieselfähiges Material erst, wenn die Trichteröffnung z.B. einen Durchmesser von 20 mm hat.

Die Angabe der Rieselfähigkeit allein reicht aber nicht aus, um Aussagen darüber zu machen, ob ein Produkt nicht doch zum Verkleben und Verklumpen neigt. Ein Mass für die Verklumpungsneigung ist die Schüttgutfestigkeit, welche z.B. in einer Scherzellenapparatur bestimmt werden kann (Scherzellenapparatur nach Jenike, s. I. Schwedes, Chem. Ing. Techn. 43 (4), 254 (1976)). Die Methode gibt Aussagen darüber, ob sich ein rieselfähiges, lockeres Pulver unter der Einwirkung von Druck und bei hohen Temperaturen verfestigt. Hohe Schüttgutfestigkeitswerte bedeuten eine hohe Verklumpungsneigung. Geringe Schüttgutfestigkeit bedeutet gute Rieselfähigkeit.

Die folgenden Beispiele zeigen die nach dem beschriebenen Verfahren zu erreichenden Verbesserungen in den Pulvereigenschaften von Pfropfpolymeren des Vinylchlorids auf Ethylen-Vinylacetatcopolymere.

Beispiel 1
a) Herstellung des Pfropfpolymerisates:
3000 Teile eines Copolymerisats aus Ethylen und Vinylacetat mit einem Vinylacetatgehalt von 45%, 5400 Teile Vinylchlorid, 60 Teile Methylcellulose, 19 800 Teile Wasser und 18 Teile α,α'-Azodiisobutyronitril werden 5 Stunden bei Zimmertemperatur in einem Autoklav gerührt. Anschliessend polymerisiert man 20 Stunden bei 60 °C.

b) Herstellung des Emulsions-Polyvinylchlorids:
In einem mit Mantelkühler und Blattrührer ausgestatteten Autoklav von 13 m³ Fassungsvermögen werden stündlich eingegeben: ca. 776 kg Vinylchlorid, 690 l einer wässrigen Lösung, die 2 Gewichtsprozent eines Alkansulfonats (Alkylketten enthalten 10 bis 18 Kohlenstoffatome, im Mittel 15 Kohlenstoffatome) und 2 kg Phosphorsäure enthält, 24 l einer 0,25gewichtsprozentigen wässrigen Wasserstoffperoxidlösung (~0,008 Gewichtsprozent, bezogen auf Vinylchlorid), 24 l einer 0,1gewichtsprozentigen wässrigen Ascorbinsäurelösung (0,003 Gewichtsprozent, bezogen auf Vinylchlorid); der Füllgrad beträgt dabei wie üblich ca. 90%. Der pH-Wert beträgt 6,3. Die Polymerisationstemperatur wird auf 50 °C gehalten. Der Umsatz beträgt ca. 91 Gewichtsprozent. Man erhält eine stabile Dispersion mit einem Feststoffgehalt von ca. 50%. Der K-Wert des Polymeren beträgt 70.

In einem 15-l-Reaktor, ausgerüstet mit Impellerrührer, werden 10 kg einer 30%igen wässrigen Suspension des nach a) hergestellten Vinylchlorid-Pfropfpolymers, mit einem K-Wert von 75, der 50% eines Ethylen-Vinylacetat-Copolymeren mit 45 Gewichtsprozent Vinylacetat enthält, vorgelegt.

In die Suspension werden 100 bzw. 400 g des nach b) hergestellten Emulsions-Polyvinylchlorids eingerührt, sodann wird ca. 60 min bei 60 °C weitergerührt.

Das Gemisch wird nach ca. einer Stunde abgenutscht und bei 50 °C im Wirbelbett getrocknet.

Das trockene rieselfähige Pulver besitzt, im Vergleich zum nicht behandelten Pfropfpolymeren folgende Eigenschaften:

| Produkt | Rieselfähigkeit (mm) | Schüttgutfestigkeit bei 50°C | | |
|---|---|---|---|---|
| | | nach 1 Std. | 2 Std. | 24 Std. |
| unbehandeltes Pfropfcopolymerisat | 4 | 2 220 | ausserh. d. Messber. | |
| behandeltes Pfropfcopolymerisat | | | | |
| 1% E-PVC | 2 | 2 230 | ausserh. d. Messber. | |
| 4% E-PVC | 2 | 340 | 470 | 600 |

Beispiel 2
Es wurde ein Vinylchlorid-Pfropfpolymerisat mit 50% Ethylen-Vinylacetat vom K-Wert 75 gemäss a) hergestellt. Nach dem Druckabfall wurden 1 bzw. 4% Emulsions-Polyvinylchlorid, bezogen auf das Suspensionspolymerisat, hergestellt gemäss b), in Latexform in den Kessel eingegeben. Das Suspensions-Latexgemisch wird eine Stunde unter Rühren auf 60 °C gehalten. Das fertige Produkt wird abgenutscht und getrocknet und hat folgende Pulverkenndaten.

| Produkt | Rieselfähig-keit (mm) | Schüttgutfestigkeit bei 50°C nach 1 Std. 24 Std. | |
|---|---|---|---|
| unbehandeltes Pfropfcopoly-merisat behandeltes Pfropfcopoly-merisat | 4 | 2 220 | ausserh. d. Messber. |
| 1% E-PVC | 2 | 1 520 | 3 470 |
| 4% E-PVC | 2 | 550 | 1 880 |

**Patentansprüche**

1. Verfahren zur Herstellung von rieselfähigen, nicht klebenden Vinylchloridpfropfpolymeren aus Ethylen-Vinylacetat-Copolymeren und Vinylchlorid mit mehr als 30 Gewichtsprozent Ethylen-Vinylacetat-Copolymer-Gehalt, dadurch gekennzeichnet, dass dem in Suspension vorliegenden Vinylchloridpfropfpolymeren 0,5 bis 10 Gewichtsprozent Polyvinylchlorid, welches nach Emulsions- oder Mikrosuspensionsverfahren hergestellt wurde, in Form eines Latex zugefügt und eine thermische Fällung des Polyvinylchlorids auf das Pfropfpolymere ohne Koagulationsmittel bewirkt wird, indem das Polymerisatgemisch 10 bis 60 min unter Rühren auf einer Temperatur von 30 bis 90 °C gehalten und anschliessend das so modifizierte Pfropfpolymerisat durch übliches Abfiltrieren und Trocknen gewonnen wird.

2. Verfahren nach Anspruch 1, dadurch gekennzeichnet, dass 3 bis 5 Gewichtsprozent Polyvinylchlorid thermisch aufgefällt werden.

**Claims**

1. A process for the production of a free-flowing non-sticky vinyl chloride graft polymer from an ethylene/vinyl acetate copolymer and vinyl chloride and having a content of more than 30 per cent by weight of ethylene/vinyl acetate copolymer, characterised in that 0.5 to 10 per cent by weight of polyvinylchloride which has been obtained by an emulsion process or microsuspension process is added in the form of a latex to the vinylchloride graft polymer present in suspension, and thermal precipitation of the polyvinylchloride onto the graft polymer is achieved without the aid of a coagulating agent by maintaining the polymer mixture for 10 to 60 minutes at a temperature of 30 to 90 °C with stirring and subsequently recovering the resulting modified graft copolymer by conventional filtration and drying steps.

2. A process according to claim 1, characterised in that from 3 to 50 per cent by weight of polyvinylchloride is thermally precipitated.

**Revendications**

1. Procédé pour la préparation de polymères greffés de chlorure de vinyle aptes à l'écoulement, non collants, en partant de copolymères éthylène-acétate de vinyle et de chlorure de vinyle, avec une teneur de plus de 30% en poids en copolymère éthylène-acétate de vinyle, caractérisé par le fait qu'au polymère greffé de chlorure de vinyle se trouvant en suspension, on ajoute sous la forme d'un latex de 0,5 à 10% en poids de polychlorure de vinyle que l'on a préparé selon des procédés en émulsion ou en microsuspension et que l'on provoque une précipation thermique du polychlorure de vinyle sur le polymère greffé, sans coagulant, en maintenant le mélange de produit de polymérisation pendant 10 à 60 minutes sous agitation, à une température de 30 à 90 °C et qu'ensuite on obtient le produit de polymérisation greffé ainsi modifié, par filtration usuelle et séchage.

2. Procédé selon la revendication 1, caractérisé par le fait que l'on précipite thermiquement de 3 à 5% en poids de polychlorure de vinyle.